Europäisches Patentamt

European Patent Office

Office européen des brevets

(19)

(11) Veröffentlichungsnummer: **0 098 452**
**B1**

(12) **EUROPÄISCHE PATENTSCHRIFT**

(45) Veröffentlichungstag der Patentschrift: 28.09.88

(21) Anmeldenummer: 83106057.9

(22) Anmeldetag: 21.06.83

(51) Int. Cl.⁴: **H 04 L 11/16, H 04 B 9/00**

(54) Schaltung zur Erkennung von Datenkollisionen in einem optischen Datenbus und Schaltung zur Erkennung des datenfreien Zustandes des Busses.

(30) Priorität: 01.07.82 DE 3224664

(43) Veröffentlichungstag der Anmeldung:
18.01.84 Patentblatt 84/03

(45) Bekanntmachung des Hinweises auf die
Patenterteilung:
28.09.88 Patentblatt 88/39

(84) Benannte Vertragsstaaten:
DE FR GB

(56) Entgegenhaltungen:
US-A-4 063 220

FIFTH TOPICAL MEETING ON OPTICAL FIBER
COMMUNICATION, 13.-15. April 1982, Seiten
22-23, Phoenix, Arizona, USA; E.G. RAWSON
et al.: "Fibernet II: an active star-configured
fiber-optic local computer network with data
collision sensing"

(73) Patentinhaber: Siemens Aktiengesellschaft
Berlin und München
Wittelsbacherplatz 2
D-8000 München 2 (DE)

(72) Erfinder: Witte, Hans-Hermann, Dr.rer.nat.Dipl.-
Phys.
Hippelstrasse 15
D-8000 München 82 (DE)
Erfinder: Moustakas, Steven, Dr. Dipl.-Ing.
Agnesstrasse 2
D-8000 München 2 (DE)

(56) References cited:
ELEKTRONIK, Band 30, Nr. 4, 27. Februar 1981,
Seiten 63-70, München, DE; Dr. H.H. WITTE:
"Optische Datenbusse für Mess- und
Regelaufgaben"

1978 IEEE INTERNATIONAL SYMPOSIUM ON
CIRCUITS AND SYSTEMS PROCEEDINGS, 17.-
19. Mai 1978, Seiten 30-34, IEEE, New York,
USA; E.G. RAWSON et al.: "Application of fiber
optics to high-speed local computer networks"

EP 0 098 452 B1

Courier Press, Leamington Spa, England.

## Beschreibung

Die Erfingung betrifft eine Schaltung zur Erkennung von Datenkollisionen in einem optischen Datenbus nach dem Oberbegriff des Patentanspruchs 1 oder 2 sowie eine Schaltung zur Erkennung des datenfreien Zustandes eines solchen optischen Datenbusses nach dem Oberbegriff des Patentanspruchs 14.

Beim Verbindungsaufbau mehrerer Teilnehmer (Rechner, Terminals, usw.) setzten sich neuerdings Bus-Netzstrukturen gegenüber den Punktzu-Punkt-Verbindungen immer mehr durch. Eine wesentliche Forderung an den geordneten Funktionsablauf auf dem Bus besteht darin, zu verhindern, daß nicht mehr als ein Teilnehmer gleichzeitig Daten auf die Busleitung absetzt. In synchron arbeitenden Systemen kann diese Forderung durch eine definierte Zuweisung von Zeitschlitzen für die einzelnen Teilnehmer erreicht werden. Asynchrone Busse sind flexibler und ermöglichen in vielen Anwendungsfällen einen höheren Datendurchsatz. Ein Beispiel für ein asynchrones Zugriffsverfahren ist das "carrier-sense-multipleaccess scheme with collision detection" (CSMA/CD), welches im Ethernet angewandt wird (siehe Comm. of the ACM, Juli 1976, Vol. 19, Nr. 7, S. 395—404).

Beim asynchronen Verfahren muß der sendewillige Teilnehmer, beispielsweise ein Rechner zu dem Zeitpunkt, zu welchem er senden will, feststellen, ob auf dem ihm zugeordneten Empfänger Daten mindestens eines anderen Rechners einlaufen. Wenn keine Daten einlaufen, nimmt er an, daß der Bus frei von Daten ist und damit ein sog. Freileitungszustand besteht. Er beginnt seine Daten auf den Bus abzusetzen. Während der Zeit, in der dieser Rechner seine Daten sendet, kann es passieren, daß auf dem empfangenden Rechner Daten von mindestens einem anderen Rechner ankommen. Dies muß in den sendenden Rechnern als Kollisionszustand erkannt werden.

Aus US—A—4 063 220 ist eine Schaltung zur Erkennung von Datenkollisionen in einem Kommunikationsmedium bekannt, das ansonsten die Merkmale des Oberbegriffs des Patentanspruchs 1 aufweist. Das Kommunikationsmedium kann aus einem optischen Datenbus bestehen (siehe dazu Elektronik, Bd. 30, Nr. 4, 1981, S. 63—70). Die bekannte Schaltung erzeugt jedesmal ein Kollisionssignal, wenn zwei verglichene Bits verschieden voneinander sind. Dieses Kollisionssignal bewirkt, daß beide sendenden Teilnehmer unmittelbar aufhören zu senden. Es ist auch eine nachgeschaltete Bewertungseinrichtung vorgesehen, welche die Möglichkeit wiederholt kollidierender Übertragungs-Restarts verhindern.

Aus 5th Topical Meeting on Optical Fiber Communication, 13.—15-April 1982, S. 22—23 geht hervor, daß die von einem bestimmten empfangenden Teilnehmer aus dem Bus empfangenen Signale einem Schwellwertglied mit einem vorbestimmten Schwellwert zuführbar sind, der nur dann überschritten wird, wenn die von zwei oder mehreren der sendenden Teilnehmer auf den Bus abgesetzten Signale überlagert sind.

Eine Schaltung zur Erkennung des datenfreien Zustandes eines optischen Datenbus ist aus IEEE International Symposium on Circuits and Systems Proc., 17.—19. Mai 1978, S. 30—34, bekannt.

Aufgabe der Erfindung ist es, eine einfache und kompakte Schaltung zur Erkennung von Datenkollisionen in einem optischen Datenbus Art und eine dazu erforderliche Schaltung zur Erkennung des datenfreien Zustandes eines optischen Datenbusses anzugeben.

Der erste Teil der Aufgabe wird ausgehend von einer Schaltung nach dem Oberbegriff des Patentanspruchs 1 durch die im kennzeichnenden Teil dieses Anspruchs oder ausgehend von einer Schaltung nach dem Oberbegriff des Patentanspruchs 2 durch die im im kennzeichnenden Teil dieses Anspruchs 2 gelöst. Der zweite Teil der Aufgabe wird ausgehend von einer Schaltung nach dem Oberbegriff des Patentanspruchs 14 durch die im kennzeichnenden Teil dieses Anspruchs angegebenen Merkmale gelöst.

Bevorzugte und vorteilhafte Ausgestaltungen der erfindungsgemäßen Schaltungen gehen aus den Unteransprüchen hervor.

Die Erfindung wird beispielhaft anhand der Figuren näher erläutert. Von den Figuren zeigen:

Figure 1 schematisch einen optischen Stern-Bus mit angeschlossenen Teilnehmern,

Figure 2 ein Blockschaltbild einer Schaltung zur Erkennung von Datenkollisionen und des datenfreien Zustandes für den in Figur 1 dargestellten Stern-Bus, und

Figure 3 ein Blockschaltbild einer Schaltung zur Erkennung von Datenkollisionen und des datenfreien Zustandes bzw. Freileitungs-Zustandes mit einer modifizierten Schaltung zur Erkennung der Datenkollisionen.

Der datenfreie Zustand wird im folgenden auch als "Freileitungs-Zustand" bezeichnet.

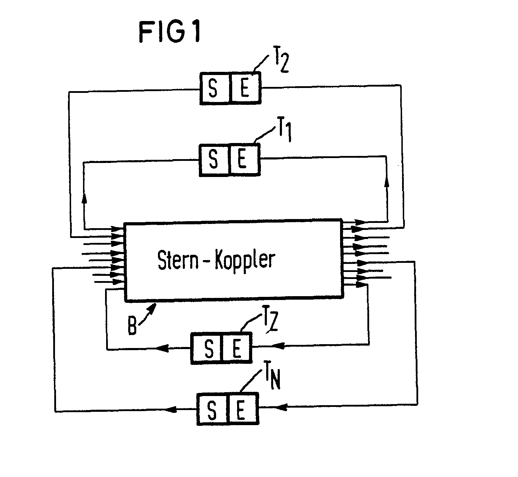

In der Figur 1 bedeuten S und E die Sende- und Empfang- module der Teilnehmer $T_1$, $T_2$, . . ., $T_N$, . . ., $T_Z$, $Z=1$, 2 . . . Über den Stern-Koppler B wird das von irgendeinem Sender S ankommende Licht gleichmäßig auf alle Ausgangsfasern des Kopplers aufgeteilt und gelangt so auf die Empfänger-Detektoren E aller Teilnehmer. Eine den Daten vorangestellte Adressierung ermöglicht eine Weiterverarbeitung der Information in gezielt ausgewählten Endgeräten. Der Sender S des Teilnehmers $T_1$ soll beispielsweise Daten zum Empfänger E des Teilnehmers $T_2$ senden. Dieser Datenstrom beim Rechner $T_2$ kann durch Daten, beispielsweise aus dem Rechner $T_N$ gestört werden, was Rechner $T_1$ und $T_N$ feststellen müssen. Die beiden logischen Zustände "1" und "0" seien im Sinne einer positiven Logik festgelegt und optisch durch Energiepakete mit der Leistung L bzw. mit der Leistung $\ll$L, beispielsweise 0, repräsentiert.

Es sind drei Zustände voneinander zu unterscheiden:

1. "1" im Datenstrom,

2. "0" im Datenstrom,

3. "kein Datenstrom vom Sender S (d.h. der Sender sendet keine Daten)".

Um großen Datendurchsatz zu erreichen, soll der Zustand "kein Datenstrom" durch eine Dauerfolge von "0"-Impulsen repräsentiert werden. Im Datenstrom können jedoch auch sehr lange "0"-Zustände vorkommen. Um den Zustand "kein Datenstrom" von einem beliebigen Datenstrom zu unterscheiden, werden ein Verwürfler SC (Scrambler) im Sender und ein entsprechender Dekodierer DS (Descrambler) im Empfänger verwendet.

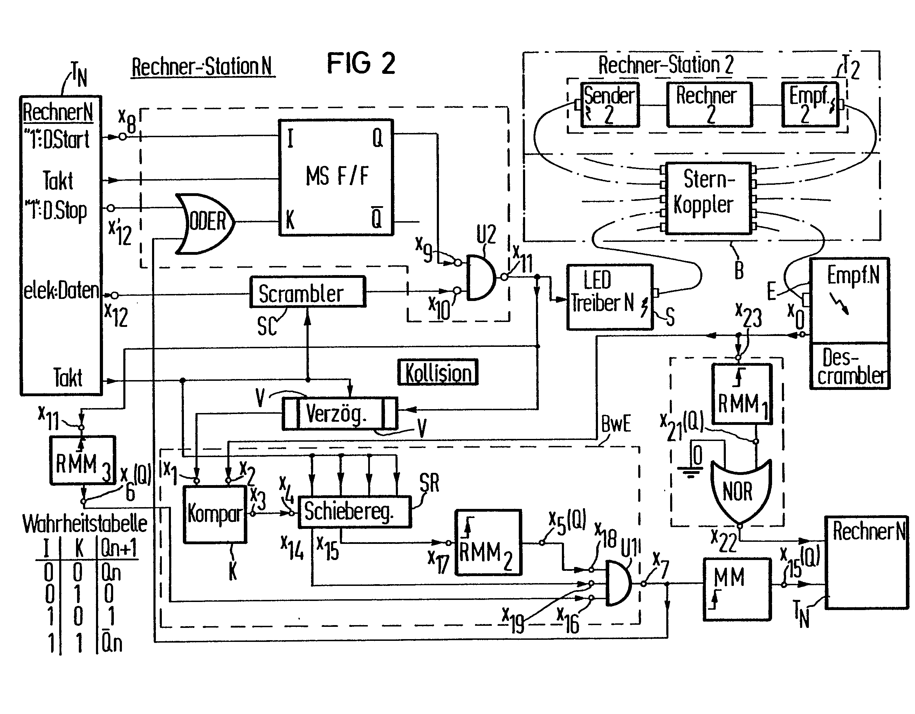

In der Figure 2 ist die Schaltvorrichtung zur Erkennung von Kollisionen und des Freileitungs-Zustandes in Verbindung mit dem Sender- und Empfängermodul S bzw. E jedes Rechners $T_N$ dargestellt. Außerdem sind die optische Übertragungsstrecke, d.h. der Bus B, bestehend aus Fasern und Stern-Koppler, sowie die Anschlußstellen zum Rechner eingezeichnet. In der Figur 2 sind die logischen Funktionen schematisch dargestellt. Es ist z.B. davon abgesehen worden, daß ein UND-Gatter möglicherweise durch eine Kombination eines NAND- mit einem Inverter-Gatter aufzubauen ist. Der Scrambler SC hat die Aufgabe, aus einer Folge von "0"- und "1"-Impulsen im elektrischen Datenstrom nach einem bestimmten Algorithmus ein anderes Bitmuster zu erzeugen, derart, daß es praktisch unmöglich ist, daß das den Scrambler SC verlassende Bitmuster mehr als z.B. acht "0"- oder acht "1"-Impulse hintereinander enthält, auch wenn in dem in den Scrambler einlaufenden Bitmuster mehr als acht "0"- oder "1"-Impulse hintereinander vorkommen. Der Zustand "kein Datenstrom" liegt also vor, wenn auf den LED-Treiber (um bei dem genannten Beispiel des Scramblers zu bleiben) mindestens neun "0"- oder "1"-Impulse in ununterbrochener Reihenfolge auftreffen.

Freileitungs-Erkennung

Der Empfänger E liefert an einem Ausgang $x_0$ die elektrischen Impulse, die den optischen "0"- und "1"-Impulsen auf dem Detektor des gleichen Empfängers entsprechen. Die elektrischen Impulse gelangen auf einen wieder auslösbaren (retriggerbaren), monostabilen Multivibrator $RMM_1$. Dieser kippt am Ausgang $x_{21}$ bei jedem "1"-Impuls in dem "1"-Zustand. Die Zeikonstante des Multivibrator $RMM_1$ (Haltezeit für den "1"-Zustand am Ausgang des Multivibrators) wird z.B. 5 μ sec lang gewählt. Die Zeitkonstante des retriggerbaren Multivibrators $RMM_1$ (Haltezeit für ein "0" am Ausgang $\bar{Q}$, wenn während dieser Zeit kein erneuter Wechsel von "0" nach "1" am Eingang des $RMM_1$ erfolgt ist) ist so zu wählen, daß $x_{21}$ nur dann "1" ist, wenn eine Dauerfolge von "0" in den Empfänger einläuft (eine Dauerfolge von "1" sei ausgeschlossen). Wenn auf den Empfänger E Daten auftreffen ("1"- und "0"-Impulse) erscheint am Ausgang $x_{22}$ des NOR-Gatters ständig der "0"-Zustand. Wenn in dem Empfänger E keine Daten einlaufen, wenn also der "Freileitungs-Zustand" vorliegt, ist der Ausgang des NOR-Gatters auf "1". Der Rechner hat somit ständig Kenntnis über die beiden Zustände, daß Daten auf dem Empfänger E auftreffen oder nicht. Bevor ein Rechner Daten senden will, wird der Zustand $x_{22}$ abgefragt, ob der Bus B für den Rechner frei erscheint.

Kollisions-Erkennung

Kollisionen im obigen Sinne treten nur bei sendenden Rechnern auf, und zwar dann, wenn während des Sendens Daten von mindestens einem anderen Rechner beim sendenden Rechner einlaufen. Dies wird dadurch festgestellt, daß die Daten des sendenden Rechners—nach einer entsprechenden zeitlichen Verzögerung—mit den am Empfänger des sendenden Rechners eintreffenden Daten bitweise verglichen werden. Stimmen beiden Bitsröme überein, so liegt mit Sicherheit keine Kollision vor. Bei einer Abweichung muß aber auch nicht notwendig eine Kollision vorliegen. Wenn nämlich nur ein Rechner sendet, jedoch in seinem Datenstrom ein Übertragungsfehler auftritt, so stimmen, die beiden zu Vergleichenden Datenströme auch nicht in allen Bits überein, obwohl in diesem Fall keine Kollision vorliegt. Es gilt also, *Kollisionen* von *Übertragungsfehlern* zu unterscheiden. Die schaltungstechnische Realisierung beruht auf folgender Erkenntnis: Die Wahrscheinlichkeit, daß entsprechende Bits nicht übereinstimmen, ist im Falle einer Kollision viel höher, als im Falle eines Übertragungsfehlers. Deshalb lautet das Unterscheidungskriterium: Nur wenn es sich innerhalb einer "sehr kurzen Zeit" mehr als einmal ereignet, daß zwei entsprechende Bits nicht übereinstimmen, handelt es sich um eine Kollision. "Sehr kurze Zeit" heißt, daß diese Zeit sehr kurz ist, gegenüber der Zeit, während der im Mittel ein Übertragungsfehler auftreten kann. Bei einer Datenrate von beispielsweise Mbit/s und einer Fehlerwahrscheinlichkeit von $10^{-9}$ tritt im Mittel alle 50 Sekunden ein Übertragungsfehler auf.

Die wesentlichen Teile der Schaltung zur Erkennung von Datenkollisionen sind in der Figure 2 dargestellt. Nur wenn eine Kollision vorliegt, soll am Ausgang $x_7$ des UND-Gatters U1 mit drei Eingängen $x_{16}$, $x_{18}$, $x_{19}$ eine "1" entstehen. Das wird wie folgt erreicht: Die elektrischen Daten, welche die LED treiben, werden auch über eine Verzögerungseinrichtung V, beispielsweuse ein Schieberegister, auf den Eingang $x_1$ eines Komparators K für den Vergleich zweier Bits gegeben. Der zweite Eingang $x_2$ des Komparators ist mit dem Ausgang $x_0$ des an den Bus B angeschlossenen Empfängers E verbunden, der die empfangenen optischen Signale in elektrische Signale, beispielsweise TTL-Impulse, umwandelt.

Die Verzögerung der elektrischen Daten, welche die LED des Senders S treiben, wird so gewählt, daß bei den Eingängen $x_1$ und $x_2$ des Komparators K immer dann die gleichen Zustände mit gleicher Phasenlage anliegen, wenn die Daten vom gleichen Rechner stammen. Wenn also die Laufzeit der Impulse über den Sender S, den Bus B, den Empfänger E bis zum Eingang $x_2$ des

Komparators K Z µs beträgt, ist die Verzögerung Z µs zu wählen. Wenn die an den Eingängen $x_1$ und $x_2$ des Komparators anliegenden Signale nicht übereinstimmen, wird dies an dem Ausgang $x_3$ des Komparators durch eine "1" angezeigt (Zeitverzögerungen in einzelnen logischen Gliedern oder -gattern bleiben im folgenden unberücksichtigt).

Das an dem Ausgang $x_3$ des Komparators K anliegende Ausgangssignal wird einem Serieneingang $x_4$ eines mit Parallelausgängen $x_{14}$ und $x_{15}$ versehenen, getakteten, Schieberegisters SR zugeführt. Der Parallelausgang $x_{14}$ ist mit einem Paralleleingang des UND-Gatters U1 verbunden, während der benachbarte Parallelausgang $x_{15}$ mit einem Eingang $x_{17}$ eines retriggerbaren monostabilen Multivibrators RMM$_2$ verbunden ist. Eine "1" am Parallelausgang $x_{15}$ löst an einem Ausgang $x_5$ des retriggerbaren, monostabilen Multivibrators RMM$_2$ für eine Dauer, die beispielsweise 12 Bit lang gewählt wird, eine "1" aus. Weichen die an den Eingängen $x_1$ und $x_2$ des Komparators K anliegenden Signale während dieser 12-Bit-Dauer nur einmal voneinander ab, so liegt ein Übertragungsfehler vor, und die an dem anderen Parallelausgang $x_{14}$ und dem Ausgang $x_5$ des Multivibrators RMM$_2$ erscheinenden Signale können nicht gleichzeitig "1" sein, wodurch am Ausgang $x_7$ des UND-Gliedes U1 notwendigerweise "0" sein muß. Tritt hingegen während des 12-Bit-Dauer mehr als einmal eine "1" am Ausgang $x_3$ des Komparators K und damit am Serieneingang $x_4$ des Schieberegisters SR auf, so liegt eine Kollision vor, und an den Ausgängen $x_{14}$ und $x_5$ erscheint während dieser Zeit mindestens einmal gleichzeitig eine "1". Durch die Zustände an den Ausgängen $x_5$ und $x_{14}$ können also Kollisionen von Übertragungsfehlern unterschieden werden.

Die Schieberegister V und SR werden über den gleichen Takt gesteuert, über den auch die elektrischen Daten vom Rechner gesteuert werden (Takt vom Rechner). Es sind dabei geeignete Phasenverschiebungen der Taktimpulse für die Schieberegister zu wählen. Dadurch kann beispielsweise erreicht werden, daß die Impulse an den Eingängen $x_1$ und $x_2$ des Komparators K in der Impulsmitte auf ihren Zustand abgefragt werden. Schwankungen in der Taktfrequenz bei kollisionsfreier Übertragung stören nicht, da sich dies auf die den Eingängen $x_1$ und $x_2$ des Komparators K zugeführten Bitströme im gleichen Sinne auswirkt.

Ein weiterer retriggerbarer, monostabiler Multivibrator RMM$_3$ erhält über einen Eingang $x_{11}$ das gleiche Bitmuster wie der LED-Treiber im Sender S. Der Multivibrator RMM$_3$ erzeugt eine "1"-Folge an einem Ausgang $x_6$, wenn an den Eingang $x_{11}$ eine "1" angelegt wird. Die Zeitkonstante des Multivibrators RMM$_3$ wird so gewählt, daß beim Eintreten einer "1" am Eingang $x_{11}$ der Ausgang $x_6$ auf "1" für eine Zeit bleibt, die gleich der Summe aus der Dauer von beispielsweise 12 Bits zuzüglich der Laufzeit eines Impulses durch den LED-Treiber, den Bus B, den Empfänger E bis zum Eingang $x_2$ des Komparators K ist. Wenn der Rechner Daten sendet, so geht nach spätestens 12 Bits—bezogen auf den Eingang $x_{11}$—der mit dem dritten Eingang $x_{16}$ verbundene Ausgang $x_6$ des monostabilen Multivibrators RMM$_3$ nach "1". Bis das zuletzt gestandte Bit des Rechners wieder bei demselben Rechner angekommen ist, bleibt somit das UND-Gatter U1 durch die "1" an seinem dritten Eingang $x_{16}$ sozusagen "offen" und liefert während dieser Zeit an seinem Ausgang $x_7$ mindestens eine "1" im Falle einer Kollision und eine "0" im Falle eines Übertragungsfehlers.

Der "1"-Impuls am Ausgang $x_7$ des UND-Gatters U1 bei einer Kollision stoppt im Rechner das weiter Datensenden. Der "1"-Impuls löst aber auch durch einen an den Ausgang $x_7$ des UND-Gatters U1 angeschlossenen zusätzlichen monostabilen Multivibrator MM einen "1"-Zustand einstellbarer Länge an einem Ausgang $x_{15}$ dieses Multivibrators MM aus. Die Länge dieses Impulses wird so gewählt, daß der Rechner wieder in den Zustand zurückkehren kann, in dem er vor dem Datensenden war. Diese Zeit zur Neuformierung kann einige 10 µs betragen. In den übrigen Rechnern, die nicht gesendet haben, werden jedoch im Falle der Feststellung einer Kollision in den sendenden Rechnern ebenfalls die Ausgänge $x_5$ der monostabilen Multivibratoren RMM$_2$ und die Parallelausgänge $x_{14}$ der Schieberegister SR gleichzeitig "1". Daß in diesen Rechnern nicht die Sendefähigkeit durch einen langen "1"-Impuls am Ausgang $x_1$ des zusätzlichen monostabilen Multivibrators MM für längere Zeit blockiert wird, wird durch den weiteren monostabilen Multivibrators RMM$_3$ erzwungen. In Rechnern, die nicht senden, ist ja der Eingang $x_{11}$ des Multivibrators RMM$_3$ auf "0" und damit auch dessen Ausgang $x_6$ auf "0", und damit sind uuch die Ausgänge $x_7$ und $x_{15}$ auf "0". Es wird also nur im Falle einer Kollision ein "1"-Impuls am Ausgang $x_7$ bzw. $x_{15}$ erhalten.

In der Schaltung gemäß Figur 2 ist auch eine Master-Slave-Flipflop MSF/F mit Eingängen J, K und Ausgängen $\overline{Q}$ und Q vorgesehen, daß durch die in Figur 2 links unten angegebene Wahrheitstabelle charakterisiert ist. Der Ausgangszustand dieser bistabilen Kippschaltung MSF/F sei zu Beginn so, daß am Ausgang Q "0" anliegt. Wenn Daten gesendet werden sollen, kommt vom Rechner ein "1"-Impuls auf den Eingang J und dadurch wird gemäß der Wahrheitstabelle der Ausgang Q auf "1" gesetzt und die Bitfolge des Scramblers SC gelangt auf den LED-Treiber des Senders S. Wenn nun andererseits eine Kollision erkannt ist, wird der "1"-Impuls am Ausgang $x_7$ des UND-Gatters U1 über ein ODER-Gatter OR an den K-Eingang des Flipflops MSF/F gelegt, der somit auf "1" liegt. Da der Eingang J auf "0" liegt, wird der Ausgang Q auf "0" gesetzt. Ebenso wird der Ausgang Q bei Datenende auf "0" gesetzt, wenn das Datenende durch einen "1"-Impuls am Eingang des NOR-Gatters angezeigt wird. Liegt der Ausgang Q auf "0" liefert der LED-Treiber eine "0"-Folge, was den Zustand "kein Datenstrom" vom Sender bedeutet.

Bei der Schaltung nach der Figur 2 muß die Verzögerung genügend genau und zeitlich stabil sein. Bei Änderung der Faserlänge des Busses oder eines Moduls muß im allgemeinen die Verzögerung neu eingestellt werden. Mit wachsender Buslänge nimmt die geforderte Verzögerung zu.

Wird die Verzögerung durch ein getaktetes Schieberegister realisiert, so wächst die Mächtigkeit des Schieberegisters mit der Buslänge.

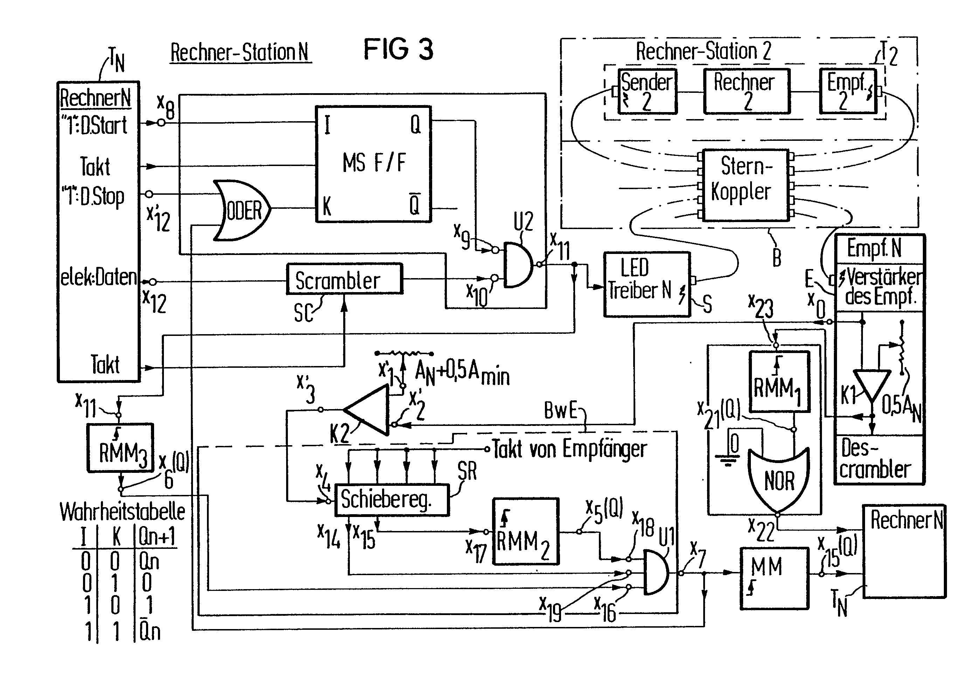

In der Figur 3 ist eine Schaltungsvariante dargestellt, bei der zur Kollisionserkennung keine Verzögerung erforderlich ist. Diese Schaltungsvariante unterscheidet sich von de Schaltung nach Figur 2 durch die anders aufgebaute Bewertungseinrichtung BwE.

Anstelle einer Verzögerungseinrichtung und des nachgeschalteten TTL-Amplitudenkomparators (beispielsweise SN 7485 von Texas Instruments) benötigt die Bewertungsschaltung BwE nach Figur 3 nur einen Analog-Komparator (beispielsweise SN 75107A von Texas Instruments). Ein weiterer Analog-Komparator ist wie auch in der Ausführungsform nach Figur 2 in dem Empfänger E enthalten, der die Impulse am Verstärkerausgang des Empfängers E wieder in rechteckige TTL-Impulse umwandelt.

Die Funktion der beiden Analog-Komparatoren zur Erkennung einer Kollision ist folgende: Aus dem Verstärker des Empfängers E kommt das elektrische Signal, dessen Amplitude vom Herkunftsort und von der Anzahl der optischen Datenströme abhängt, die auf den Detektor des Empfängers E auftreffen. In dem nicht dargestellten Verstärkerteil des Empfängers E ist gegebenenfalls eine Vorrichtung vorgesehen, durch die die Amplitude am Verstärkerausgang nicht größer werden kann, als die zulässige Spannung am Eingang der Komparatoren.

Die Unterscheidung eines Bitstromes vom mehreren Bitströmen geschieht mit Hilfe der beiden Komparatoren K1 und K2 dadurch, daß die beiden Komparatoren auf verschiedenen Schwellwerten arbeiten. Durch verschiedene Ursachen—variable Faser—und Streckendämpfungen, ungleichmäßige Leistungsaufteilung durch den Mischer, usw.—schwanken die Leistungen am Ort eines Empfängers $E_N$ als Funktion der verschiedenen Teilnehmer $T_M$ (M=1, ... N ... Z; Z=Zahl der Teilnehmer.

Die Amplitude am Verstärker-Ausgang (der zum Teilnehmer $T_N$ gehört), die durch die optische Leistung erzeugt wird, die vom Teilnehmer selbst ausgesandt ist, möge $A_N$ betragen. Die minimal mögliche Amplitude am Ausgang dieses Verstärkers für nur einen Bitstrom sei mit $A_{min}$ bezeichnet. Am Komparator K1 wird die Schwellspannung auf etwa 0,5 $A_N$ und im Komparator K2 auf etwa $A_N + 0,5 \cdot A_{min}$ eingestellt. Dadurch erhält man (bei entsprechender Pinbelegung der Komparatoren) am Ausgang von K1 für den eigenen Bitstrom (vom Teilnehmer N kommend) das eigene Bitmuster zurück, am Ausgang von K2 erhält man "0". Wenn der eigene Bitstrom durch Bitströme von mindestens einem anderen Teilnehmer gestört wird (Kollision), überlagern sich die optischen Leistungen und somit auch die Amplituden am Ausgang des Verstärkers vom Teilnehmer $T_N$. Wenn die Amplitude am Verstärkerausgang die Schwelle $A_N + 0,5 \cdot A_{min}$ des Komparators K2 überschreitet, wird der Ausgang des Komparators K2 auf "1" gesetzt. Durch beispielsweise Rauschbeiträge könnte der Ausgang von K2 auch "1" werden, obwohl die Signal-Amplitude die Schwellspannung $A_N + 0,5 \cdot A_{min}$ nicht überschreitet. Um diese Übertragungsfehler von wirklichen Kollisionen zu unterscheiden, wird so verfahren, wie es bei der Ausführungsform nach Figur 2 der Fall ist. Der Takt für das Schieberegister SR der Bewertungsschaltung BwE wird aus dem Bitstrom im Empfänger E abgeleitet.

Es ist noch das Problem der Phasenlage zweier oder mehrerer Bitströme zueinander zu erwähnen. Es muß davon ausgegangen werden, daß jeder Phasenunterschied zwischen den Bitströmen auftreten kann. Das hat zur Folge, daß die Amplituden der Bitströme am Ausgang des Verstärkers im allgemeinen zeitlich nicht zusammenfallen, so daß möglicherweise die Schwellspannung $A_N + 0,5 \cdot A_{min}$ nicht überschritten und am Ausgang des Komparators K2 keine "1" erzeugt wird, obwohl eine Kollision vorliegt. Wenn jedoch einer der Bitströme zwei "1" hintereinander enthält und in diesem Zeitabschnitt eine "1" des anderen Bitstromes fällt (die Phasenlage spielt jetzt keine Rolle mehr), wird eine Kollision erkannt. Das bedeutet zar theoretisch gegenüber der Ausführung gemäß Figur 2 im allgemeinen eine längere Zeit für die Erkennung einer Kollision, praktisch ist dies jedoch unerheblich. Durch die Einstellung der Schwellwerte an den Analog-Komparatoren K1 und K2 ist man praktisch unabhängig von den Leistungsschwankungen am Empfänger in Abhängigkeit vom jeweils sendenden Teilnehmer geworden.

Abschließend seien die beiden Ausführungsformen nach Figur 2 und 3 miteinander verglichen.

Beide Ausführungsformen verwenden die gleiche Schaltung zur Erkennung des Freileitungs-Zustandes.

Die Ausführungsform nach Figure 3 benötigt im allgemeinen eine längere Zeit bevor eine Kollision erkannt werden kann. Diese Zeit verkürzt sich mit zunehmender Anzahl der störenden Teilnehmer. Wenn nur ein Stör-Rechner vorhanden ist, kann diese Störung (Kollision) frühestens nach der Zeit erkannt werden, die ein Impuls benötigt, um an den Ort zu kommen, von dem er ausgesandt worden ist.

Die Ausführungsform nach Figur 3 ist einfacher als die Ausführung nach Figur 2. Man benötigt keine Verzögerung zum Ausgleich der Laufzeit-Effekte durch den Bus.

Diese Verzögerung, die überdies zeitlich stabil sein muß, ist in der Ausführung nach Figur 2 möglicherweise neu vorzunehmen, wenn das optische Kabel oder ein Modul ausgetauscht werden. In der Ausführung nach Figur 3 wird der Takt für das Schieberegister dem Empfänger entnommen. Für nur einen Bitstrom besteht ein strenger Synchronismus zwischen dem Takt und den Daten, die ins Schieberegister eingetaktet werden.

In den vorstehend beschriebenen Ausführungsbeispielen ist der bestimmte sendende Teilnehmer zugleich auch der bestimmte empfangende Teilnehmer. Dies muß nicht sein. Der bestimmte empfangende Teilnehmer und der bestimmte sendende Teilnehmer können auch voneinander verschieden sein. So könnte in Figur 1 beispielsweise und ohne Beschränkung der Allgemeinheit $T_N$ der bestimmte sendende Teilnehmer sein, während einer der übrigen Teilnehmer $T_1$, $T_2$, . . ., $T_{N-1}$, $T_{N+1}$, . . ., $T_Z$ der bestimmte empfangende Teilnehmer sein.

## Patentansprüche

1. Schaltung zur Erkennung von Datenkollisionen in einem optischen Datenbus, an den mehrere sendende und empfangende Teilnehmer angeschlossen sind, wobei mehrere sendende Teilnehmer asynchron Daten in Form von Bitfolgen absetzen, und wobei jeder sendende Teilhehmer seine Daten erste absetzt, nachdem er festgestellt hat, daß der Datenbus keine Daten führt, dadurch gekennzeichnet, daß

—die von einem bestimmten sendenden Teilnehmer ($T_N$) auf den Bus (B) abzusetzenden und einem bestimmten empfangenden Teilnehmer ($T_N$) zuzuführenden Daten nach dem Empfang durch diesen bestimmten empfangenden Teilnehmer ($T_N$) einen Vergleichseingang ($x_2$) eines zwei Vergleichseingänge ($x_1$, $x_2$) aufweisenden Amplitudenkomparators (K) zum Vergleich der Amplituden zweier Signale zuführbar sind, dessen zweitem Vergleichseingang ($x_1$) die von dem bestimmten sendenden Teilnehmer ($T_N$) erzeugten und auf den Bus abzusetzenden Daten über eine Verzögerungseinrichtung (V) zuführbar sind, welche die ihr zugeführten Daten um eine Zeitspanne verzögert, die bewirkt, daß die Daten im wesentlichen gleichzeitig an den beiden Vergleichseingängen ($x_1$, $x_2$) ankommen, und daß

—dem Komparator (K) eine Bewertungseinrichtung (BwE) nachgeschaltet ist, die ein eine Datenkollision anzeigendes Kollisionssignal erzeugt, wenn es sich in einer vorgebbaren kurzen Zeitspanne mehr als einmal ereignet, daß zwei im Komparator (K) verglichene Bits verschieden voneinander sind.

2. Schaltung zur Erkennung von Datenkollisionen in einem optischen Datenbus, an dem mehrere sendende und empfangende Teilnehmer angeschlossen sind, wobei mehrere sendende Teilnehmer asynchron Daten in Form von Bitfolgen absetzen, wobei jeder sendende Teilnehmer seine Daten erst absetzt, nachdem er festgestellt hat, daß der Datenbus keine Daten führt, und wobei aus dem Bus empfangene Signale einem Schwellwertglied (K2) mit einem vorbestimmten Schwellwert zuführbar sind, der nur dann überschritten wird, wenn die von zwei oder mehreren sendenden Teilnehmern auf den Bus (B) abgesetzten Signale überlagert sind, dadurch gekennzeichnet, daß

—die von einem bestimmten empfangenden Teilnehmer ($T_N$) aus dem Bus (B) empfangenen Signale dem Schwellwertglied (K2) zugeführt sind, und daß

—dem Schwellwertglied (K2) eine Bewertungseinrichtung (BwE) nachgeschaltet ist, die ein eine Datenkollision anzeigendes Kollisionssignal erzeugt, wenn es sich in einer vorgebbaren kurzen Zeitspanne mehr als einmal ereignet, daß der Schwellwert ($A_N + 0,5 \cdot A_{min}$) des Schwellwertgliedes (K2) überschritten wird.

3. Schaltung nach Anspruch 1 oder 2, dadurch gekennzeichnet, daß der bestimmte sendende Teilnehmer ($T_N$) zugleich auch der bestimmte empfangende Teilnehmer ($T_N$) ist.

4. Schaltung nach Anspruch 1, dadurch gekennzeichnet, daß die Verzögerungseinrichtung (V) und der Komparator (K) aus einem elektrischen Verzögerungsschaltkreis und einem elektrischen TTL-Komparator bestehen.

5. Schaltung nach Anspruch 4, dadurch gekennzeichnet, daß der elektrische Verzögerungsschaltkreis (V) aus einem Schieberegister besteht.

6. Schaltung nach Anspruch 1, dadurch gekennzeichnet, daß das Schwellwertglied (K2) aus einem elektrischen Schwellwertschalter besteht, dem die auf den Bus (B) abgesetzten Daten nach Umwandlung in entsprechende elektrische Signale zuführbar sind, und daß der Schwellwert ($A_N + 0,5 \cdot A_{min}$) dieses Schwellwertschalters gleich der von dem bestimmten sendenden Teilnehmer ($T_N$) allein erzeugten und dem Schwellwertschalter (K2) zugeführten maximalen Signalamplitude ($A_N$) zuzüglich der halben minimalen Signalamplitude ($A_{min}$) gewählt ist.

7. Schaltung nach Anspruch 6, dadurch gekennzeichnet, daß der Schwellwertschalter (K2) aus einem zwei Vergleichseingänge ($x_1'$, $x_2'$) aufweisenden analogen Amplitudenkomparator besteht, von dem ein Vergleichseingang ($x_1'$) auf das Potential des Schwellwertes ($A_N + 0,5 \cdot A_{min}$) gelegt und der andere Vergleichseingang ($x_2'$) mit einem Ausgang ($x_0$) des Empfängers (E) des empfangenden Teilnehmers ($T_N$) verbunden ist.

8. Schaltung nach einem der vorhergehenden Ansprüche, dadurch gekennzeichnet, daß die Bewertungseinrichtung (BwE) ein getaktetes Schieberegister (SR) mit einem Serieneingang) ($x_4$) und mit Parallelausgängen ($x_{14}$, $x_{15}$) umfaßt, welches mit seinem Serieneingang an einen Ausgang ($x_3$ bzw. $x_3'$) des Komparators (K) bzw. des Schwellwertgliedes (K2) angeschlossen ist, und das mit dem Takt betrieben wird, mit dem die von dem bestimmten sendenden Teilnehmer ($T_N$) abzusetzenden ·Daten getaktet werden oder das im Fall des Schwellwertgliedes (K2) von den von dem bestimmten empfangenden Teilnehmer ($T_N$) empfangenen Signalen direkt getaktet wird.

9. Schaltung nach Anspruch 8, dadurch gekennzeichnet, daß der dem Serieneingang ($x_4$) nächstliegende Parallelausgang ($x_{14}$) des getakteten Schieberegisters (SR) mit einem Eingang ($x_{19}$) eines UND-Gliedes (U1) und der andere Parallelausgang ($x_{15}$) mit dem Eingang ($x_{17}$) eines retriggerbaren, monostabilen Multivibrators ($RMM_2$) verbunden ist, so daß beim Übergang von einem bestimmten Binärzustand ("0") in den anderen Binärzustand ("1") ein Ausgang ($x_5$) des Multivibrators ($RMM_2$) in einem bestimmten Binärzustand ("1") übergeht und die genannte kurze Dauer lang in diesem Zustand bleibt.

10. Schaltung nach Anspruch 9, dadurch gekennzeichnet, daß beim Übergang von dem Binärzustand "0" in den Binärzustand "1" am Eingang ($X_{17}$) des Multivibrators ($RMM_2$), dessen Q-Ausgang ($x_5$) für eine Zeit von beispielsweise 12 Bits in den Binärzustand "1" übergeht.

11. Schaltung nach Anspruch 9 oder 10, dadurch gekennzeichnet, daß ein weiterer retriggerbarer monostabiler Multivibrator ($RMM_3$) mit einem Eingang ($x_{11}$) und einem mit einem dritten Eingang ($x_{16}$) des UND-Gliedes (U1) verbundenen Ausgang ($x_6$) vorgesehen ist, dessen Eingang ($x_{11}$) die von dem bestimmten sendenden Teilnehmer ($T_N$) erzeugten Daten ohne wesentliche Verzögerung zuführbar sind und der so bemessen ist, daß beim Übergang von einem bestimmten Binärzustand ("0") in den anderen ("1") an seinem Eingang ($x_{11}$) sein Ausgang ($x_6$) für eine Zeit in einen bestimmten Binärzustand ("1") übergeht, die gleich der Summe aus der genannten kurzen Dauer und der Laufzeit eines vom bestimmten sendenden Teilnehmer ($T_N$) erzeugten und über den Bus (B) und den bestimmten empfangenden Teilnehmer ($T_N$) bis zum Komparator (K) bzw. dem Schwellwertschalter (K2) ist.

12. Schaltung nach Anspruch 11, dadurch gekennzeichnet, daß an den Ausgang ($x_7$) des UND-Gliedes (U1) ein zusätzlicher monostabiler Multivibrator (MM) mit einem Ausgang ($x_{15}$) angeschlossen ist, der beim Übergang von einem bestimmten Binärzustand ("0") in den anderen ("1") am Ausgang ($x_7$) des UND-Gliedes (U1) für eine Zeit in einen bestimmten Binärzustand ("1") wechselt, die so lange dauert, daß der bestimmte durch den Wechsel in den bestimmten Binärzustand ("1") am Ausgang ($x_{15}$) des zusätzlichen Multivibrators (MM) gestoppte sendende Teilnehmer ($T_N$) wieder in einen Zustand zurückkehren kann, in dem er vor dem Datensenden war.

13. Schaltung nach einem der Ansprüche 9 bis 12, dadurch gekennzeichnet, daß der Ausgang ($x_7$) des UND-Gliedes (U1) über ein ODER-Glied (OR) mit dem K-Eingang eines J-K-Flipflops verbunden ist, dessen J-Eingang mit einem Ausgang ($x_8$) des bestimmten sendenden Teilnehmers ($T_N$) verbunden ist, an dem zum Start des Datensendens in den bestimmten Binärzustand ("1") am Ausgang ($x_7$) des UND-Gliedes (U1) gewechselt wird, daß das ODER-Glied (OR) mit einem Ausgang ($x'_{12}$) des bestimmten sendenden Teilnehmers ($T_N$) verbunden ist, an dem zum Stoppen der ausgesandten Daten in den bestimmten Binärzustand ("1") am Ausgang ($x_7$) des UND-Gliedes (U1) gewechselt wird, und daß ein Datenausgang ($x_{12}$) des bestimmten sendenden Teilnehmers ($T_N$), an dem die zu sendenden Daten abgegeben werden, und ein Ausgang (Q) des J-K-Flipflops mit je einem Eingang ($x_{10}$ bzw. $x_9$) eines zweiten UND-Gliedes (U2) verbunden sind, dessen Ausgang ($x_{11}$) über einen elektrooptischen Wandler an den Bus (B) angeschlossen ist.

14. Schaltung zur Erkennung des datenfreien Zustandes eines optischen Datenbus, an den sendende und empfangende Teilnehmer angeschlossen sind, wobei mehrere sendende Teilnehmer Daten in Form von Bitfolgen, insbesondere asynchron, absetzen, wobei die von einem sendenden Teilnehmer abgegebenen Daten derart verwürfelt werden, daß in den Bitfolgen der verwürfelten Daten Bits eines Binärzustandes ("1" oder "0") allenfalls n-mal (n=vorgebbaren ganze Zahl) hintereinander vorkommen können, auch wenn in den Bitfolgen der noch unverwürfelten Daten Bits eines bestimmten Binärzustandes ("1" oder "0") öfter hintereinander vorkommen, insbesondere für eine Schaltung nach einem der vorhergehenden Ansprüche zum Feststellen, daß der Datenbus keine Daten führt, dadurch gekennzeichnet, daß zwischen jedem sendenden Teilnehmer ($T_1$, $T_2$, $T_3$, ..., $T_N$, ..., $T_Z$) und dem Datenbus (B) ein Scrambler (SC) angeordnet ist, in dem die von dem sendenden Teilnehmer abgegebenen Daten in der angegebenen Weise verwürfelt werden, und daß die von einem bestimmten empfangenden Teilnehmer ($T_N$) empfangene verwürfelte Bitfolge einem Setzeingang ($x_{23}$) eines retriggerbaren monostabilen Multivibrators ($RMM_1$) zuführbar ist, der so bemessen ist, daß bei einem Wechsel in den einen bestimmten Binärzustand ("1") am Eingang ($x_{23}$) der Ausgang ($x_{21}$) eine Zeit lang in den bestimmten Binärzustand ("1") wechselt, wobei die Zeitkonstante des monostabilen Multivibrators ($RMM_1$) so gewählt ist, daß ein einen Freizustand anzeigendes Binärsignal an dem Ausang ($x_{21}$) des Multivibrators ($RMM_1$) nur auftritt, wenn eine Dauerfolge von Impulsen eines bestimmten Binärzustandes ("0") im dem bestimmten empfangenden Teilnehmer ($T_N$) registriert wird, die dem Zustand eines fehlenden Datenstromes entspricht.

15. Schaltung nach Anspruch 14, dadurch gekennzeichnet, daß dem Ausgang ($x_{21}$) des monostabilen Multivibrators ($RMM_1$) ein Inverter (NOR) nachgeschaltet ist.

16. Schaltung nach Anspruch 14 oder 15, dadurch gekennzeichnet, daß die verwürfelte Bitfolge dem monostabilen Multivibrator (RMM) über ein regenerierendes Schwellwertglied (K1) zugeführt ist.

17. Schaltung nach einem der Ansprüche 14 bis 16, dadurch gekennzeichnet, daß der bestimmte empfangende Teilnehmer ($T_N$) zugleich auch der sendende Teilnehmer ist, der mit dem Ausgang ($x_{21}$) des monostabilen Multivibrators ($RMM_1$) verbunden ist.

**Revendications**

1. Circuit pour détecter des collisions de données dans un bus optique de transmission de données, auquel sont raccordés plusieurs abonnés émetteurs et récepteurs, et dans lequel plusieurs abonnés émetteurs délivrent d'une manière asynchrone des données sous la forme de suites de bits et dans lequel chaque abonné émetteur délivre ses données uniquement après

avoir établi que le bus de transmission de données ne véhicule aucune donnée, caractérisé par le fait que

—les données, qui doivent être délivrées au bus (B) par un abonné émetteur déterminé ($T_N$) et qui doivent être envoyées à un abonné récepteur déterminé ($T_N$), peuvent être envoyées, après la réception par cet abonné récepteur déterminé ($T_N$), à une entrée de comparaison ($x_2$) d'un comparateur d'amplitude (K) comportant deux entrées de comparaison ($x_1$, $x_2$), pour la comparaison des amplitudes des deux signaux, et à la seconde entrée de comparaison ($x_1$) duquel les données qui sont produites par l'abonné émetteur déterminé ($T_N$) et devant être délivrées au bus, peuvent être envoyées par l'intermédiaire d'un dispositif de retardement (V), qui retarde les données qui lui sont envoyées, d'un intervalle de temps tel que les données arrivent sensiblement simultanément aux deux entrées de comparaison ($x_1$, $x_2$), et

—qu'en aval du comparateur (K) se trouve branché un dispositif d'évaluation (BwE), qui produit un signal de collision indiquant une collision de données lorsque le phénomène, consistant en ce que deux bits comparés dans le comparateur (K) sont différents l'un de l'autre, apparaît plus d'une fois pendant un intervalle de temps bref pouvant être prédéterminé.

2. Circuit pour identifier des collisions de données dans un bus optique de transmission de données, auquel sont raccordés plusieurs abonnés émetteurs et récepteurs, et dans lequel plusieurs abonnés émetteurs délivrent d'une manière asynchrone des données sous la forme de suites de données uniquement après avoir établi que le bus de transmission de données ne véhicule aucune donnée, et dans lequel les signaux reçus peuvent être envoyés à partir du bus à un circuit à valeur de seuil (4) possédant une valeur de seuil prédéterminée, qui n'est dépassée que lorsque les signaux délivrés au bus (B) par deux ou plusieurs abonnés émetteurs sont superposés, caractérisé par le fait que:

—les signaux reçus en provenance du bus (B) par un abonné récepteur déterminé ($T_N$) sont envoyés au circuit à valeur de seuil (K2), et que

—en aval du circuit à valeur de seuil (4) se trouve branché un dispositif d'évaluation (BwE), qui produit un signal de collision indiquant une collision de données, lorsque le phénomène, consistant en un dépassement de la valeur de seuil ($A_N + 0,5 \cdot A_{min}$) du circuit à valeur de seuil (K2) se produit plus d'une fois pendant un bref intervalle de temps pouvant être prédéterminé.

3. Circuit suivant la revendication 1 ou 2, caractérisé par le fait que l'abonné émetteur déterminé ($T_N$) est également simultanément l'abonné récepteur déterminé ($T_N$).

4. Circuit suivant la revendication 1, caractérisé par le fait que le dispositif de retardement (V) et le comparateur (K) sont constitués par un circuit électrique de raccordement et par un comparateur électrique (TTL).

5. Circuit suivant la revendication 4, caractérisé par le fait que le circuit électrique de retardement (V) est constitué par un registre à décalage.

6. Circuit suivant la revendication 1, caractérisé par le fait que le circuit à valeur de seuil (4) est constitué par un commutateur électrique à valeur de seuil, auquel les données délivrées au bus (B) peuvent être envoyées après conversion des signaux électriques correspondants, et que la valeur de seuil ($A_N + 0,5 \cdot A_{min}$) de ce commutateur à valeur de seuil est choisie égale à l'amplitude maximale ($A_N$), produite uniquement par l'abonné émetteur déterminé ($T_N$) et envoyée au commutateur de seuil (K2), additionnée de la moitié de la valeur de l'amplitude minimale du signal ($A_{min}$).

7. Circuit suivant la revendication 6, caractérisé par le fait que le commutateur à valeur de seuil (K2) est constitué par un comparateur d'amplitude analogique comportant deux entrée de comparaison ($x_1'$, $x_2'$), parmi lesquels l'entrée de comparaison ($x_1'$) est placée au potentiel de la valeur de seuil ($A_N + 0,5 \cdot A_{min}$) tandis que l'autre entrée de comparaison ($x_2'$) est reliée à une sortie ($x_0$) du récepteur (E) de l'abonné récepteur ($T_N$).

8. Circuit suivant l'une des revendications précédentes, caractérisé par le fait que le dispositif d'évaluation (BwE) comporte un registre à décalage cadencé (SR) possédant une entrée en série ($x_4$) et des sorties en parallèle ($x_{14}$, $x_{15}$) et qui est raccordé par son entrée en série à une sortie ($x_3$ ou $x_3'$) du comparateur (K) ou du circuit à valeur de seuil (K2) et qui fonctionne avec la cadence avec laquelle les données devant être délivrées par l'abonné émetteur déterminé ($T_N$) ou qui, dans le cas du circuit à valeur de seuil (K2), est commandé de façon cadencée directement par les signaux reçus par l'abonné récepteur déterminé ($T_N$).

9. Circuit suivant la revendication 8, caractérisé par le fait que la sortie en parallèle ($x_4$), qui suit immédiatement l'entrée en série ($x_4$), du registre à décalage cadencé (SR) est reliée à une entrée ($x_{19}$) d'un circuit ET (U1) et l'autre sortie en parallèle ($x_{15}$) est reliée à l'entrée ($x_{17}$) d'un multivibrateur monostable redéclenchable ($RMM_2$) de sorte que, lors du passage d'un état binaire déterminé ("0") dans l'autre état binaire ("1"), une sortie ($x_5$) du multivibrateur ($RMM_2$) passe dans un état binaire déterminé ("1") et reste dans cet état pendant ledit intervalle de temps bref.

10. Circuit suivant la revendication 9, caractérisé par le fait que lors du passage de l'état binaire "0" à l'état binaire "1" à l'entrée ($x_{17}$) du multivibrateur ($MMM_2$), la sortie Q ($x_5$) de ce multivibrateur passe pendant un intervalle de temps de par exemple 12 bits à l'état binaire "1".

11. Circuit suivant la revendication 9 ou 10, caractérisé par le fait qu'il est prévu un autre multivibrateur monostable redéclenchable ($RMM_3$) qui comporte une entrée ($x_{11}$) et une sortie ($x_6$) reliée à une troisième entrée ($x_{16}$) du circuit ET (U1) et à l'entrée ($x_{11}$) duquel les données produites par l'abonné émetteur déterminé ($T_N$) peuvent être envoyées sans retard important, et qui est dimensionné de telle sorte que lors du passage d'un état binaire déterminé ("0") à l'autre état binaire ("1") au niveau de son entrée ($x_{11}$), sa sortie ($x_6$) passe à un état binaire déterminé ("1") pendant un intervalle de temps qui est égal à la somme dudit bref intervalle de temps et du temps de propagation d'un signal produit par l'abonné émetteur déterminé ($T_N$) et transmis par l'intermédiaire du bus (B) et de l'abonné récepteur déterminé ($T_N$) jusqu'au comparateur (K) ou au commutateur à valeur de seuil (K2).

12. Circuit suivant la revendication 11, caractérisé par le fait qu'à la sortie de détection (17) du circuit ET (U1) se trouve raccordé un multivibrateur monostable supplémentaire (MM) comportant une sortie ($x_{15}$), qui, lors du passage d'un état binaire déterminé ("0") à l'autre état binaire ("1") sur la sortie ($x_7$) du circuit ET (U1), passe à un état binaire déterminé ("1") pendant un intervalle de temps qui dure suffisamment longtemps pour que l'abonné émetteur déterminé ($T_N$), qui est interrompu par suite du passage à l'état binaire déterminé ("1") sur la sortie ($x_{15}$) du multivibrateur supplémentaire (MM), puisse à nouveau revenir dans un état, dans lequel il se trouvait avant l'émission de données.

13. Circuit suivant l'une des revendications 9 à 12, caractérisé par le fait que la sortie ($x_1$) du circuit ET (U1) est reliée par l'intermédiaire d'un circuit (OU) à l'entrée (K) d'une bascule bistable de type J—K, dont l'entrée J est reliée à une sortie ($x_8$) de l'abonné émetteur déterminé ($T_N$), au niveau de laquelle, pour faire démarrer l'émission des données, on commute la sortie ($x_7$) du circuit ET (U1) dans l'état binaire déterminé ("1"), que le circuit OU (OR) est relié à une sortie ($x_{12'}$) de l'abonné émetteur déterminé ($T_N$), au niveau de laquelle, pour arrêter les données émises, on commute la sortie ($x_7$) du circuit ET (U1) dans l'état binaire déterminé ("1"), et qu'une sortie de données ($x_{12}$) de l'abonné émetteur déterminé ($T_N$), au niveau de laquelle les données devant être émises sont délivrées, et une sortie (Q) de la bascule bistable de type J—K sont reliées à des entrées respectives ($x_{10}$ et $x_9$) d'un second circuit ET (U2), dont la sortie ($x_{11}$) est raccordée par l'intermédiaire d'un transducteur électro-optique au bus (B).

14. Circuit pour identifier l'état libre de données d'un bus optique de transmission de données, auquel des abonnés émetteurs et des abonnés récepteurs sont raccordés, et dans lequel plusieurs abonnés émetteurs délivrent des données sous la forme de suites binaires notamment d'une manière asynchrone, et dans lequel les données délivrées par un abonné émetteur sont brouillées de telle sorte qu'en général des bits possédant un état binaire ("1" ou "0") peuvent apparaître successivement en général n fois (n=nombre entier pouvant être prédéterminé) dans les suites binaires des données brouillées, même lorsque, dans les suites binaires des données encore non brouillées, des bits possédant un état binaire déterminé ("1" ou "0") apparaissent successivement plus souvent, notamment pour un circuit suivant l'une des revendications précédentes, servant à déterminer que le bus de transmission de données ne véhicule aucune donnée, caractérisé par le fait qu'entre chaque abonné émetteur ($T_1$, $T_2$, $T_3$, . . ., $T_N$, . . ., $T_Z$) et le bus (B) de transmission de données se trouve disposé un brouilleur (SC), dans lequel les données délivrées par l'abonné émetteur sont brouillées de la manière indiquée, et que la situe binaire brouillée, reçue par un abonné récepteur déterminé ($T_N$), peut être envoyée à une entrée de positionnement ($x_{23}$) d'un multivibrateur monostable redéclenchable ($RMM_1$) qui est dimensionné de telle sorte que dans le cas d'un passage à un état binaire déterminé ("1") à l'entrée ($x_{23}$), la sortie ($x_{21}$) passe dans un état binaire déterminé ("1") pendant un intervalle de temps, la constante de temps du multivibrateur monostable ($RMM_1$) étant choisie de manière qu'un signal binaire indiquant un état libre n'apparaisse à la sortie ($x_{21}$) du multivibrateur ($RMM_1$) que lorsqu'une suite continue d'impulsions possédant un état binaire déterminé ("0"), qui correspond à l'état d'absence d'un flux de données, est enregistrée chez l'abonné récepteur déterminé ($T_N$).

15. Circuit suivant la revendication 14, caractérisé par le fait qu'un inverseur (NOR) est branché en val de la sortie ($x_{21}$) du multivibrateur monostable ($RMM_1$).

16. Circuit suivant la revendication 14 ou 15, caractérisé par le fait que la suite binaire brouillée est envoyée au multivibrateur monostable (RMM) par l'intermédiaire d'un circuit à valeur de seuil (K1) à régénération.

17. Circuit suivant l'une des revendications 14 à 16, caractérisé par le fait que l'abonné récepteur déterminé ($T_N$) est également simultanément l'abonné émetteur qui est relié à la sortie de détection (21) du multivibrateur monostable ($RMM_1$).

**Claims**

1. A circuit for detecting data collisions in an optical data bus to which a plurality of transmitting and receiving subscribers are connected, where a plurality of transmitting subscribers asynchronously down-load data in the form of bits sequences and where each transmitting subscriber down-loads its data only when it has established that the data bus carries no data, characterised in that

—the data items which are to be down-loaded by a specified transmitting subscriber ($T_N$) on to the bus (B) and which are to be supplied to a specified receiving subscribed ($T_N$), having been received by said specified receiving subscriber ($T_N$), can be fed to a comparator input ($x_2$) of an amplitude comparator (K) which serves to compare the amplitudes of two signals and which is provided with two comparator inputs ($x_1$, $x_2$), the second comparator input ($x_1$) of which can be supplied with the data items, which are generated by the specified transmitting subcriber ($T_N$) and which are to be down-loaded onto the bus, via a delay device (V) which delays the data with which

it is supplied by a time interval which causes the data items to arrive fundamentally simultaneously at the two comparator inputs $(x_1, x_2)$, and that

—the comparator (K) is connected at its output to an evaluating device (BwE) which produces a collision signal indicative of a data collision, when it occurs more than once, within a predeterminable, short time interval, that two bits compared in the comparator (K) differ from one another.

2. A circuit for detecting data collisions in an optical data bus to which a plurality of transmitting and receiving subscribers are connected, where a plurality of transmitting subscribers asynchronously down-load data in the form of bit sequences, where each transmitting subscriber down-loads its data only when it has established that the data bus carries no data, and where signals received from the bus can be fed to a threshold value device (K2) which has a predetermined threshold value which is overshot only when the signals down-loaded on to the bus (B) by two or more transmitting subscribers are superimposed, characterised in that

—the signals received from the bus (B) by a specified receiving subscriber $(T_N)$ are fed to the threshold value device (K2) and that

—the threshold value device (K2) is connected at its output to an evaluating device (BwE) which generates a collision signal, indicative of a data collision, when it occurs more than once within a predeterminable, short time interval that the threshold value $(A_N + 0.5 \cdot A_{min})$ of the threshold value device (K2) is overshot.

3. A circuit as claimed in claim 1 or claim 2, characterised in that the specified transmitting subscriber $(T_N)$ is simultaneously the specified receiving subscriber $(T_N)$.

4. A circuit as claimed in claim 1, characterised in that the delay device (V) and the comparator (K) comprise an electrical delay circuit and an electric TTL-comparator.

5. A circuit as claimed in claim 4, characterised in that the electrical delay circuit (V) comprises a shift register.

6. A circuit as claimed in claim 1, characterised in that the threshold value device (K2) comprises an electrical threshold value switch which can be supplied with the data down-loaded on to the bus (B), following conversion into corresponding electrical signals, and that the threshold value $(A_N + 0.5 \cdot A_{min})$ of this threshold value switch is selected to be identical to the maximum signal amplitude $(A_N)$, which is produced only by the specified transmitting subscriber $(T_N)$ and is supplied to the threshold value switch (K2), plus half the minimum signal amplitude $(A_{min})$.

7. A circuit as claimed in claim 6, characterised in that the threshold value switch (K2) comprises an analogue amplitude comparator which has two comparator inputs $(x_1', x_2')$, of which one comparator input $(x_1')$ is connected to the potential of the threshold value $(A_N + 0.5 \cdot A_{min})$ and the other comparator input $(x_2')$ is connected to an output $(x_0)$ of the receiver (E) of the receiving subscriber $(T_N)$.

8. A circuit as claimed in one of the preceding claims, characterised in that the evaluating device (BwE) includes a clock-controlled shift register (SR) which has a series input $(x_4)$ and parallel outputs $(x_{14}, x_{15})$ and which is connected by its series input to an output $(x_3$ and $x_3')$ of the comparator (K) and of the threshold value device (K2) respectively, and which is operated by means of the clock signal which clock-controls the data to be down-loaded by the specified transmitting subscriber $(T_N)$ or which, in the case of the threshold value device (K2), is directly clock-controlled by the signals received by the specified receiving subscriber $(T_N)$.

9. A circuit as claimed in claim 8, characterised in that the parallel output $(x_{14})$ of the clock-controlled shift register (SR) which is located nearest to the series input $(x_4)$ is connected to an input $(x_{19})$ of an AND-gate (U1), and the other parallel output $(x_{15})$ is connected to the input $(x_{17})$ of a retriggerable, monostable multivibrator $(RMM_2)$, so that in the event of a transition from one specified binary state ("0") to the other ("1"), an output $(x_5)$ of the multivibrator $(RMM_2)$ assumes a specified binary state ("1") and remains in this state for the aforesaid short time interval.

10. A circuit as claimed in claim 9, characterised in that in the event of a transition from the binary state "0" to the binary state "1" at the input $(x_{17})$ of the multivibrator $(RMM_2)$, the Q-output $(x_5)$ of the multivibrator assumes the binary state "1" for a time interval of, for example, 12 bits.

11. A circuit as claimed in claim 9 or claim 10, characterised in that a further retriggerable, monostable multivibrator $(RMM_3)$ with an input $(x_{11})$ and an output $(x_6)$, connected to a third input $(x_{16})$ of the AND-gate (U1), is provided, whose input $(x_{11})$ can be supplied without any fundamental delay with the data items generated by the specified transmitting subscriber $(T_N)$ and which is designed to be such that in the event of a transition from one specified binary state ("0") to the other ("1"), at its input $(x_{11})$, it output $(x_6)$ assumes a specified binary state ("1") for a time interval which is equal to the sum of the aforesaid short time interval and the delay time of a (pulse?) generated by the specified transmitting subscriber $(T_N)$ and (transmitted?) via the bus (B) and the specified receiving subscriber $(T_N)$ to the comparator (K) and the threshold value switch (K2).

12. A circuit as claimed in claim 11, characterised in that the output $(x_7)$ of the AND-gate (U1) is connected to an additional monostable multivibrator (MM) with an output $(x_{15})$ which, in the event of a transition from one specified binary state ("0") to the other ("1") at the output $(x_7)$ of the AND-gate (U1) changes to a specified binary state ("1") for a time interval of such duration that the specified transmitting subscriber $(T_N)$, which has been stopped as a result of the change to the specified binary state ("1") at the output ($x_{15}$) of the additional multivibrator (MM) can return to a state which it occupied prior to the data transmission.

13. A circuit as claimed in one of claims 9 to 12, characterised in that the output ($x_7$) of the AND-gate (U1) is connected via an OR-gate (OR) to the K-input of a J—K-flip-flop whose J-input is connected to an output ($x_8$) of the specified transmitting subscriber ($T_N$) at which, at the start of the data transmission, a change occurred to the specified binary state ("1") at the output ($x_7$) of the AND-gate (U1), that the OR-gate (OR) is connected to an output ($x'_{12}$) of the specified transmitting subscriber ($T_N$) at which, in order to stop the transmitted data, a change occurred to the specified binary state ("1") at the output ($x_7$) of the AND-gate (U1), and that a data output ($x_{12}$) of the specified transmitting subscriber ($T_N$), from the data to be transmitted is emitted, and an output (Q) of the J—K-flip-flop are each connected to a respective input ($x_{10}$, $x_9$) of a second AND-gate (U2) whose output ($x_{11}$) is connected to the bus (B) via an electro-optical transducer.

14. A circuit for detecting the data-free state of an optical data bus to which transmitting and receiving subscribers are connected, where a plurality of transmitting subscribers down-load data in the form of bit sequences, in particular asynchronously, where the data emitted by a transmitting subscriber is scrambled in such manner that bits with one binary state ("1" or "0") in all events can occur in series only n-times (n=a predeterminable whole number) in the bit sequences of the scrambled data, even if bits with a specified binary state ("1" or "0") occur in series more frequently in the bit sequences of the still unscrambled data, in particular for a circuit as claimed in one of the preceding claims for establishing that the data bus carries no data, characterised in that between each transmitting subscriber ($T_1$, $T_2$, $T_3$, . . ., $T_N$, . . ., $T_Z$) and the data bus (B) is arranged a scrambler (SC) in which the data emitted by the transmitting subscriber is scrambled in the described manner, and that the scrambled bit sequence received by a specified receiving subscriber ($T_N$) can be supplied to a setting input ($x_{23}$) of a retriggerable, monostable multivibrator ($RMM_1$) which is designed to be such that in the event of a change to the first specified binary state ("1") at the input ($x_{23}$), the output ($x_{21}$) changes to the specified binary state ("1") for an interval of time, where the time constant of the monostable multivibrator ($RMM_1$) is selected to be such that a binary signal, indicative of a free-state, occurs at the output ($x_{21}$) of the multivibrator ($RMM_1$) only when a continuous sequence of pulses with a specified binary state ("0") which corresponds to the state in which no data flow occurs—is recorded by the specified receiving subscriber ($T_N$).

15. A circuit as claimed in claim 14, characterised in that the output ($x_{21}$) of the monostable multivibrator ($RMM_1$) is connected to an inverter (NOR).

16. A circuit as claimed in claim 14 or claim 15, characterised in that the scrambled bit sequence is supplied to the monostable multivibrator (RMM) via a regenerating threshold value device (K1).

17. A circuit as claimed in one of the claims 14 to 16, characterised in that the specified receiving subscriber ($T_N$) is simultaneously the transmitting subscriber which is connected to the output ($x_{21}$) of the monostable multivibrator ($RMM_1$).

# FIG 1

FIG 2

Rechner-Station N

Rechner-Station 2

$T_N$

RechnerN
"1":D.Start
Takt
"1":D.Stop
elek:Daten
Takt

Sender 2 | Rechner 2 | Empf. 2

$T_2$

Stern-Koppler

MS F/F

ODER

Scrambler

SC

Kollision

Verzög.

LED Treiber N

Des-crambler

Empf.N

RMM₁

RMM₃

Wahrheitstabelle

Kompar

Schiebereg.

SR

RMM₂

NOR

MM

RechnerN

| I | K | Qn+1 |
|---|---|------|
| 0 | 0 | Qn |
| 0 | 1 | 0 |
| 1 | 0 | 1 |
| 1 | 1 | Q̄n |

0 098 452

2

**FIG 3**

Rechner-Station N